# EUROPEAN PATENT SPECIFICATION

(11) **EP 2 669 512 B1**
(45) Date of publication and mention of the grant of the patent: **16.09.2015**
(21) Application number: 12170517.2
(22) Date of filing: 01.06.2012
(51) Int. Cl.: F03D 11/00, H02K 11/00, H02K 7/18

(54) **Grounding arrangement**
Erdungsanordnung
Dispositif de mise à la terre

(43) Date of publication of application: 04.12.2013
(73) Proprietor: Siemens Aktiengesellschaft, 80333 München (DE)
(72) Inventor: Lemma, Edom, 7330 Brande (DK)

(56) References cited:
- DE-A1-102009 017 531
- US-A- 5 804 903
- US-A- 5 988 996
- US-A1- 2003 086 630
- US-B1- 6 249 058

## Description

The invention describes a grounding arrangement for a direct-drive wind turbine generator; a grounding element for use in such a grounding arrangement; a direct-drive wind turbine generator; and a method of performing maintenance on a grounding arrangement.

During operation of an electrical machine such as a motor or generator, a shaft voltage can build up on the rotating part of the machine. In a permanent magnet generator driven by a full power converter, the shaft voltages appear to be caused by converter PWM (pulse-width modulation) switching. A current associated with this shaft voltage will seek a path to ground. In a machine such as a direct-drive generator with an outer rotor, the only path to ground may go through a bearing between the rotor and the stator. Over time, these discharge currents can damage the bearing by causing fretting in raceways and on rollers. Since the bearing must fulfil the very critical function of ensuring a smooth operation of the rotor, it is of paramount importance to protect the bearing from such discharge currents.

Grounding mechanisms for the bearings of an electrical machine are known, and there are several different approaches, depending on the type of machine. High-speed, relatively small machines can use solid metal grounding rings arranged between shaft and bearing casing to provide a current path to electrical ground.

In a wind turbine generator, the choice of grounding solution depends to a large extent on the topology of the wind turbine drive. In many conventional wind turbines, the drive train and generator are separate and are coupled by means of a gearbox. Grounding is not difficult to achieve for such machines, since the rotor is an inner rotor and is coupled to the gear box shaft, so that a path to electrical ground, circumventing any bearing, can easily be found for a voltage that has built up on the rotor.

The known grounding solutions cannot generally be applied to large-scale low-speed generators. For one, the design of a permanent magnet machine does not employ slip rings as part of the circuit. Ideally, there should be no current in the rotor. However, due to active switching in the power converter, a voltage can still develop on the rotating structure. Known grounding mechanisms for such generators are therefore based on electrically isolating the bearing from the rotating part, and much effort is invested in preventing the development of voltages on the rotor in the first place.

In a permanent magnet direct-drive wind turbine, the generator and drive train are realised as a single entity, without any gearbox. Instead, the generator is coupled directly to the rotor, usually an outer rotor, of the wind turbine. Due to the large rotor size - in the order of several meters in diameter - and other geometric constraints, it is very difficult to ground the bearing current in such a direct-drive generator. In a medium- to low-speed direct-drive generator, because of the large dimensions involved, it is practically impossible to employ grounding rings. Such a grounding ring cannot be applied to an outer rotor of a direct-drive permanent magnet machine, since there is no shaft-like structure to which it could be connected. Therefore, the use of such grounding rings is limited to high-speed applications with correspondingly small shaft diameters.

To isolate the bearing from the rotor, a ring of insulating material is usually arranged about the bearing. For example, electrical grade fibre-glass is often used as an insulation layer between the main bearing inner ring and the main shaft. However, the presence of the insulating ring will not prevent any voltage from developing on the rotor. Therefore, if the insulating ring is not perfectly realised or does not have the required electrical grade, a voltage on the rotor may still result in a current succeeding in finding a path through the bearing.

To inhibit or suppress the development of voltages on the rotor, input and output filters are used to counteract the influence of the PWM switching converter. However, these filters are expensive and therefore add to the overall cost of the generator. Furthermore, such filters cannot always reliably rule out the development of voltages on the rotor.

Therefore, the known grounding solutions for permanent-magnet direct-drive generators that are based on a combination of the above still cannot rule out the possibility of the main bearing being damaged by discharge currents caused by shaft voltages building up on the rotor and discharging to ground through the main bearing.

It is therefore an object of the invention to provide an improved and economical grounding solution for such a direct-drive wind turbine generator.

This object is achieved by the grounding arrangement of claim 1; by the grounding element of claim 5; by the direct-drive generator according to claim 12; and by the method of claim 14 of performing maintenance on such a grounding arrangement.

According to the invention, the grounding arrangement for a direct-drive generator comprises an outer rotor, a stator, and a bearing arranged between the rotor and the stator; which grounding arrangement comprises a number of grounding elements, and wherein a grounding element comprises a grounding brush arranged to provide a current path from the rotor to electrical ground, which current path bypasses the bearing.

An advantage of the grounding arrangement according to the invention is that the electrical current can always be safely diverted from the bearing by always offering it a direct path to ground, for example a low-resistance path to a casing of the generator. An electrical current will always chose the path of least resistance, so that the likelihood of a current seeking a path through the bearing can safely be ruled out. Furthermore, since the bearing is effectively protected from such currents, expensive filter arrangements are no longer required to counteract the effects of the switching converter. The grounding arrangement according to the invention is therefore favourably economical.

According to the invention, the grounding element, for providing a current path to electrical ground from the rotor of a direct-drive wind turbine generator, comprises a grounding brush comprising a spring-loaded portion and a contact portion for electrically contacting a rotor region; a bracket realised to be mounted to a stationary part of the generator; and a holding element realised to hold the grounding brush in the bracket such that the contact portion is pressed against the rotor region.

An advantage of the grounding element according to the invention is that it can be manufactured very economically and will not add significantly to the costs of the generator. The co-operation of the bracket and holding element serves to ensure that the grounding brush is always pressed against a surface of the generator to offer a current a safe path to ground.

According to the invention, the direct-drive generator comprises an outer rotor, a stator, and a bearing arranged between the rotor and the stator, which generator comprises a grounding arrangement according to the invention to provide a current path from the rotor to electrical ground, and wherein the grounding arrangement preferably comprises a number of grounding elements according to the invention.

An advantage of the direct-drive generator according to the invention is that the bearing can be reliably protected from the negative effects of a current discharge. Therefore, the direct-drive generator according to the invention does not explicitly require an expensive filter arrangement to avoid the build-up of voltages on the rotor. Instead, such voltages may be deliberately allowed to build up, since the grounding arrangement can effectively deal with them. The costs of manufacture and maintenance for the direct-drive generator according to the invention are also favourably reduced.

According to the invention, the method of performing maintenance on such a grounding arrangement, arranged in a direct-drive wind turbine generator comprising an outer rotor, a stator, and a bearing arranged between the rotor and the stator, and preferably comprising such a grounding element, comprises the step of adjusting the position of the grounding brush in a grounding element to increase a pressure between the contact portion of the grounding brush and a corresponding contact region to ensure an uninterrupted current path from the outer rotor to electrical ground that bypasses the bearing. This pressure may be referred to in the following simply as the "contact pressure".

An advantage of the method according to the invention is that the functionality of a grounding element of the grounding arrangement can be quickly and easily ensured. A maintenance procedure can simply involve a correction of the position of a grounding brush. Since a grounding element can be secured at a convenient position on the generator, the grounding element can be quickly accessed and adjusted, as will be made clear in the description and the diagrams.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the direct-drive generator is the generator of a wind turbine. In such a wind turbine, the rotor is an outer rotor arranged about the stator, and the rotor rotates at a relatively low speed, typically in the order of only a few revolutions per minute (rpm). In such a wind turbine design, the rotor blades are usually very long, and a rotor blade can be 20 - 30 m or more in length. The outer rotor may be assumed in the following to comprise a rotor housing in the form of a cylindrical structure, with a plurality of magnets arranged on its interior; a rotor front plate at the drive or hub end of the rotor housing that extends from an outer perimeter of the rotor housing to the main bearing; and a brake plate at the non-drive end that serves to halt the rotation of the rotor housing when necessary. Also, in the following, the stator may be assumed to comprise a stator main shaft to which the main bearing is connected, and an outer frame to which the stator windings or coils are mounted such that these face the magnets across a narrow air-gap.

The main bearing of a direct-drive wind turbine is generally located at the hub side, between the rotor and the stator. An inner ring of the main bearing is usually bolted about a main shaft of the stator. A physical contact between the rotor and the main bearing is usually achieved by a circular front plate that is part of the rotor and that extends from an outer rotor edge inward to the bearing. This will be shown in the diagrams. In a particularly preferred embodiment of the invention, a first set of grounding elements is arranged at the main bearing side, i.e. the hub side of the generator. In this case, a grounding element makes an electrical contact between the rotor front plate and the stator main shaft. In this way, any rotor shaft voltages that build up can discharge directly in a current path through the front plate, and into the stator main shaft, which can be effectively regarded as electrical ground, since the main shaft usually makes direct electrical contact to a bed-frame, which in turn is either in electrical contact with a tower top flange, or a low-resistance path between the bed-frame and tower top flange can be provided by other means. Generally, a wind turbine is equipped with a lightning protection system, so that there would be a lightning grounding path from the blades to a tower top flange, and the bearing grounding arrangement according to the invention could avail of this.

It is good practice to have an evenly distributed current path and low-resistance distribution in the grounding mechanism. Therefore, alternatively or in addition to the first set of grounding elements, the grounding arrangement according to the invention comprises a second set of grounding elements arranged at the brake side of the generator. With these grounding elements at the opposite end of the rotor to the hub side, the shaft voltage can optimally discharge at the brake side. A grounding arrangement using only non-drive-end grounding elements could be used to provide a low-resistance current path to ground, and might be included in the initial wind turbine design. Such a grounding arrangement may be added later, should an initial bearing protection fail, for example if a bearing isolation ring becomes damaged at some stage and cannot provide complete protection for the bearing.

A grounding brush may wear down over time and ultimately may make only poor contact to the surface against which it is pressed. This situation may persist for a while before it is possible for a technician to replace the worn brush. The bearing may be at risk during this time. Therefore, in a particularly preferred embodiment of the invention, the grounding arrangement comprises an isolation ring arranged about the bearing.

The grounding brush used in the grounding element according to the invention can be any off-the-shelf or custom component. Off-the-shelf carbon brushes, used for contacting the commutation slip rings of an electric motor for, generally comprise a block-like contact portion and a spring-loaded portion used to press the contact portion of the brush against a surface. The contact portion can be made of pressed graphite or carbon powder, sometimes with added copper for improved conductivity, and can be manufactured as a solid block, as a braided element, or as a bunch of fibres. Generally, such a brush is simply referred to as a "carbon brush". Such a carbon brush can be used to good effect in a grounding arrangement according to the invention, where it is not used for commutation purposes, but is instead used to divert a current away from the main bearing. In the following, without restricting the invention in any way, the terms "grounding brush", "carbon brush" and "brush" may be used interchangeably.

The present invention, uses the carbon brush to good effect, namely to ground the outer rotor of a permanent-magnet direct-drive generator, which would not otherwise require carbon brushes since commutation is not an issue for such a generator. One reason why such brushes would not be used in grounding solutions for generators is that they are highly unsuitable for use in a high-speed permanent-magnet machine. The geometry and electrical design of a high speed inner rotor machine such as an electric motor readily lends itself to the used of a grounding ring, and the uses of carbon brushes has been restricted to commutation. Furthermore, at high rpm rates, typically in the order of hundreds or even thousands of rpm, such brushes would wear down extremely quickly and require frequent servicing. As regards wind turbine generators, up until recently, most wind turbines have been realised as high rpm generators with a gearbox for coupling the high rpm rotor to the generator, providing an easily accessible current path to ground. Shaft voltages building up on an inner rotor of such a generator can therefore be grounded with relatively little effort.

The grounding element is preferably realised to hold the carbon brush securely during operation of the generator, and to ensure a firm physical contact between an outer face of the contact portion and the surface against which this is pressed. Such a firm physical contact will result in a favourable electrical contact between those two surfaces. Therefore, in a particularly preferred embodiment of the invention, the holding element of the grounding element comprises a first cavity realised to accommodate the carbon brush such that the contact portion of the carbon brush protrudes beyond an outer face of the holding element. The first cavity is preferably machined to fit snugly about the contact portion, so that the front of the contact portion is always pressed flat against the surface with which it should make contact. Usually, the contact portion has a square or rectangular cross-section. Therefore, in a preferred embodiment of the invention, the first cavity is formed to have such a square or rectangular cross-section, at least over a section of its length. For example, one end of the first cavity at the outer end of the holding element can be milled to form a square cross-section. The length of the milled square cross-section might correspond to one half, one third or any suitable fraction of the length of the contact portion of a carbon brush. Since milling a square or rectangular opening is generally relatively expensive, the square portion of the first cavity can be kept to a reasonable minimum, and any remaining length of the first cavity can be formed as a simple round bore. A contact portion with a square or rectangular cross-section is better at maintaining a favourable electrical contact at all times, since the contact portion cannot rotate about its longitudinal axis within the cavity. In that case, a first cavity with a square portion is preferable. However, a carbon brush with an essentially cylindrical contact portion having a round cross-section could conceivably be used, in which case the entire first cavity could be formed relatively cheaply as a straightforward circular bore.

As indicated above, even at low rpm values, the carbon brush may wear down over time, so that the contact pressure lessens. Therefore, in a further preferred embodiment of the invention, the grounding element comprises a feed adjuster for adjusting the position of the carbon brush in the holding element. The feed adjuster is preferably realised to increase the contact pressure between the outer face of the contact portion and the surface against which it is pressed. Therefore, in a further preferred embodiment of the invention, the holding element comprises a second cavity realised to accommodate the feed adjuster. For example, the feed adjuster can be preferably realised as a screw that can be turned to move it further into the holding element such that it would act to compress the spring portion of the carbon brush. In a preferred embodiment of the invention, therefore, the holding element comprises an inner threaded portion realised to complement an outer threaded portion of the feed adjuster. Preferably, the feed adjuster is realised as a grub screw, to allow a compact realisation of the grounding element, and the second cavity is threaded to accommodate such a grub screw. Such a grub screw usually has a hex socket so that it can be tightened or loosened using a corresponding Allen key.

The length of the second cavity and its inner thread are preferably machined to complement the length of the "surplus" contact portion held in the first cavity, so that as much as possible of the carbon brush can be effectively used, before having to replace it, for example by screwing the feed adjuster further into the second cavity. An indication that a carbon brush is worn down to a critical limit might be given when the feed adjuster cannot be moved any further into the second cavity.

As already indicated, the grounding element comprises a bracket with which the holding element is secured relative to the rotating part of the generator. The bracket and holding element could be realised in one piece. This might require very exact machining to ensure that the holding element is at a correct distance from the rotating part. Preferably, the bracket and holding element are realised separately, so that the position of the holding element relative to the rotating part can be adjusted as required. The holding element and bracket could be realised such that the holding element is clamped in the bracket, for example. Preferably, however, the holding element comprises an outer threaded portion realised to complement an inner threaded portion of the bracket, so that the holding element can be screwed into the bracket. The threaded realisation allows a very precise adjustment of the distance between the holding element (and therefore also of the carbon brush it contains) and the rotating part of the generator.

As indicated above, the grounding arrangement can comprise grounding elements mounted at the drive end (the hub side) or the non-drive end (the brake side) of the generator. The geometries of the drive end and the non-drive end are very different. Therefore, in a further preferred embodiment of the invention, the bracket is realised for mounting to a stator shaft such that the carbon brush contacts a bearing surface to provide a current path from the rotor through the stator shaft to electrical ground and/or for mounting to a brake disc such that the carbon brush contacts a rotor surface to provide a current path from the rotor through the brake disc to electrical ground. Depending on where the grounding element is to be mounted, the bracket can be realised accordingly. For example, the bracket could be three-dimensional, flat, curved; with an L-shape, a straight shape, etc.

A grounding arrangement can comprise any appropriate number of grounding elements. A single grounding element may be sufficient to ensure good contact and a low-resistance path to ground. Care should be taken to replace the worn brush in good time. Preferably, a grounding arrangement comprises two or more brushes. For example, a first "three-brush" grounding arrangement could comprise three grounding elements arranged between the stator shaft and the rotor front plate. A second grounding arrangement, for example at the non-drive end, might be a "two-brush" grounding arrangement with a pair of grounding elements arranged between the brake plate and the rotor housing.

Preferably, to ensure a favourably low-resistance path to ground, the material(s) of which the holding element and/or feed adjuster and/or bracket are made comprise good conductive materials such as steel, brass, copper, an alloy of two or more materials, etc.

In the direct-drive generator according to the invention, an appropriate component preferably comprises a number of access openings arranged to provide access to a bracket of a grounding element. For example, for a grounding element arranged between the stator shaft and the rotor front plate, an access opening in the stator front plate can allow quick and easy access to the feed adjuster of the grounding element, so that a contact pressure can be adjusted, or a worn-down brush can be easily replaced by a new one. For a grounding element arranged between a brake plate and the rotor housing, an access opening may be required, for example for a wind turbine with a high IP (International Protection) rating. Such access openings may be realised with sealing covers, so that, when not in use, an air-tight seal is made, to prevent moisture or air-borne particles from entering. For a wind turbine with a lower IP rating, a cover may not be mandatory, so that the grounding elements can be accessed very easily.

A maintenance step, for ensuring good contact to the carbon brushes, preferably comprises the steps of removing a feed adjuster of a grounding element and then removing the carbon brush from that grounding element. Then, a replacement carbon brush can be inserted, and the feed adjuster can be replaced and tightened such that a pressure is established between the contact portion of the carbon brush and a corresponding contact region.

The carbon brushes of a grounding arrangement may be installed such that, initially, they have different lengths. They may be assumed to wear down equally over time. By ensuring that the carbon brushes of the grounding elements have different lengths, even if one or two carbon brushes of a multi-brush grounding arrangement should wear down, at least one brush remains to fulfil the function of providing a current path to ground that bypasses the bearing until a maintenance step can be carried out. Such an arrangement, with varying initial brush lengths, can be advantageous also in the case when the rotor has an inherent imbalance or eccentricity that results in an uneven loading of the brushes. The length of a brush that is subject to more wear could initially be longer than the other brushes, to counteract the uneven loading by the rotor.

The time taken to wear down a carbon brush can be reliably estimated, since information pertaining to the number of revolutions made by the rotor housing, the force acting to press the contact portion against a rotating part, the original length of the contact portion, etc., can be determined. Using this information, the expected lifetime of a carbon brush (i.e. the useful lifetime of the contact portion) can be computed. A maintenance procedure can therefore be planned in advance, for example to coincide with other maintenance work on other components or units of the generator. During such a maintenance procedure, the worn-down brush and the other only partially worn-down brushes may all be replaced by brushes of different lengths, as mentioned above, or by new brushes of equal length. Of course, it may be preferred to replace only a worn-down brush, and to leave the others to wear down fully before replacing. The choice of action may depend on how often the wind turbine can be accessed for such maintenance work.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a carbon brush for use in a grounding element according to the invention;
Fig. 2 shows a first view of a holding element of a grounding element according to an embodiment of the invention for holding the carbon brush of Fig. 1;
Fig. 3 shows a second view of the holding element of Fig. 1;
Fig. 4 shows a cross-section through a carbon brush and a feed adjuster held in the holding element of Fig. 1;
Fig. 5 shows a first embodiment of a bracket for the holding element of Fig. 2;
Fig. 6 shows the holding element of Fig. 2 mounted in the bracket of Fig. 5;
Fig. 7 shows a cross-section of a part of a generator 3 and a grounding element 2 according to Fig. 2;
Fig. 8 shows a prior art grounding arrangement for a direct-drive wind turbine generator;
Fig. 9 shows a first embodiment of a grounding arrangement according to the invention;
Fig. 10 shows a second embodiment of a grounding arrangement according to the invention.

In the diagrams, like numbers refer to like objects throughout. Objects in the diagrams are not necessarily drawn to scale.

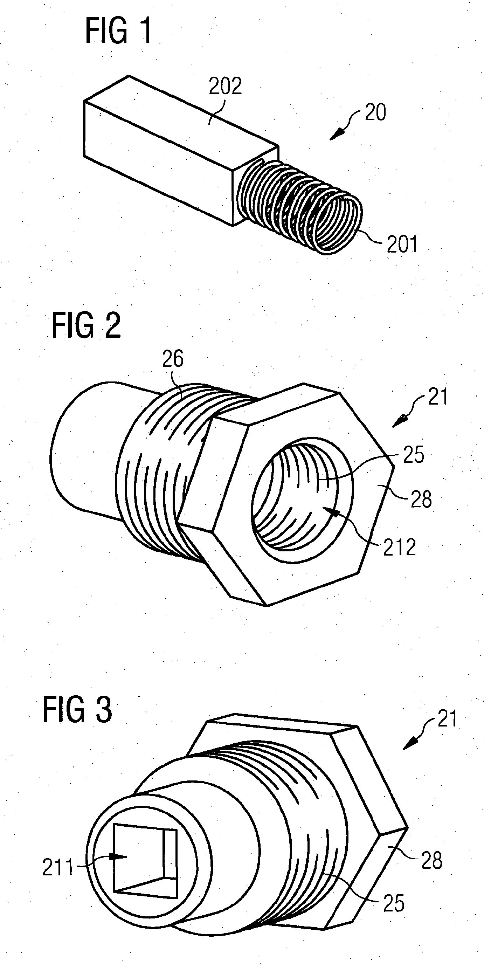

Fig. 1 shows a carbon brush 20 for use in a grounding element according to the invention. The carbon brush 20 has a spring-loaded portion 201 and a contact portion 202 for electrically contacting a rotor region. The contact portion 202, usually made mostly of graphite, may wear down over time on account of the friction between the front face of the contact portion 202 and the part against which it presses. The spring-loaded portion 201, usually made of steel and partially embedded in the contact portion 202, has a spring constant large enough to ensure that the contact portion 202 is pressed with sufficient force against the relevant part to be contacted. Here, the diameter of the spring portion 201 does not exceed the width of the contact portion 202.

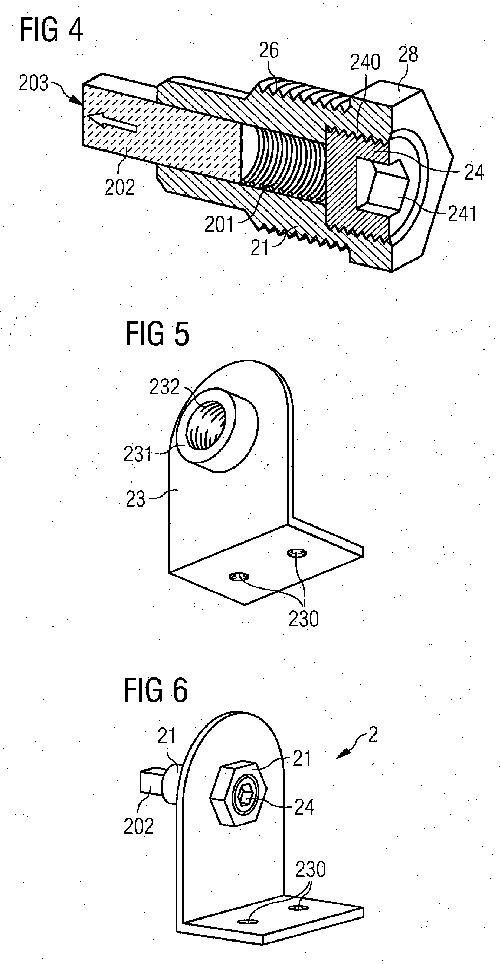

Figs. 2, 3, and 4 show various views of a holding element 21 according to an embodiment of the invention, for holding the carbon brush 20 of Fig. 1. The entire holding element 21 can be made in one piece of an electrically conductive material such as industrial grade steel. The holding element 21 comprises a first cavity 211 that is shaped to accommodate the carbon brush 20, and a second cavity 212 shaped to accommodate a feed adjuster 24. The first cavity 211 in this embodiment has a square cross-section, over its entire length, into which both the "square" contact portion 202 and the "round" spring portion 201 fit. The width of the first cavity 211 is just slightly wider than the width of the contact portion 202 and the diameter of the spring portion 201. The exterior of the holding element 21 is realised to complement a bracket, and comprises an outer thread 26 that matches an inner thread of a bracket, as will be explained with the aid of Fig. 5 below. In this embodiment, the holding element 21 also comprises a hex head 28 for tightening the holding element 21 in the bracket with a suitable tool such as a hex wrench. In the region of the second cavity 212, the holding element 21 has an inner thread 25 to match that of a feed adjuster 24 for adjusting the position of the carbon brush 20, as shown in Fig. 4. In an alternative embodiment, the first cavity 211 could have a "square" cavity at its outer end to provide a snug fit for the contact portion 202 of the carbon brush, and a "round" cavity at the other end to contain the spring portion, formed as a counter-bored circular opening that circumscribes the "square" cavity. This counter-bored circular cavity can be formed as an extension of the second cavity 212 of the holding element 21. The first cavity 211 and second cavity 212 are realised so that a carbon brush can be inserted into the holding element from the "front", i.e. through the second cavity 212.

Fig. 4 shows a cross-section through the holding element 21 containing a carbon brush 20, and a feed adjuster 24, in this case a grub screw 24. As the diagram clearly shows, the carbon brush 20 fits snugly in the first cavity 211, while allowing the contact portion 202 to move in the direction shown, and the spring-loaded portion 201 is also free to extend. Assuming the inner thread 25 of the second cavity 212 is a right-hand thread, a force will be applied to the spring-loaded portion 201 when the feed adjuster 24 is turned clockwise. As a result, the spring portion 201 will compel the contact portion 202 to move "outwards" in the direction shown along the first cavity 201 to extend beyond an outer face of the holding element 21. In this way, a reliable contact can easily be achieved between an outer surface 203 of the contact portion 202 and a surface against which it is pressed by the spring action of the spring-loaded portion 201. As long as the grounding element 2 is electrically connected in some way to electrical ground, any electrical current can pass through the contact portion 202 and into the body of the grounding element 2 to find a low-resistance path to ground. Current can flow through the contact portion 202, the spring-loaded portion 201, the grub screw 24 and the body of the holding element 21.

Fig. 5 shows a first embodiment of a bracket 23 realised to accommodate the holding element 2. In this embodiment, the bracket 23 comprises a three-dimensional L-shaped element with a number of threaded mounting bushings 230 by means of which the bracket 23 can be secured to a component such as a stator shaft. The bracket 23 also comprises a holder bushing 231 with an inner thread 232 to match the outer thread 26 of a holding element 21.

Fig. 6 shows a holding element 21 mounted in a bracket 23. The diagram also shows how the feed adjuster 24 can easily be accessed from the front of the bracket 23, while the contact portion 202 of the carbon brush 20 is seen to protrude from beyond the end of the holding element 21.

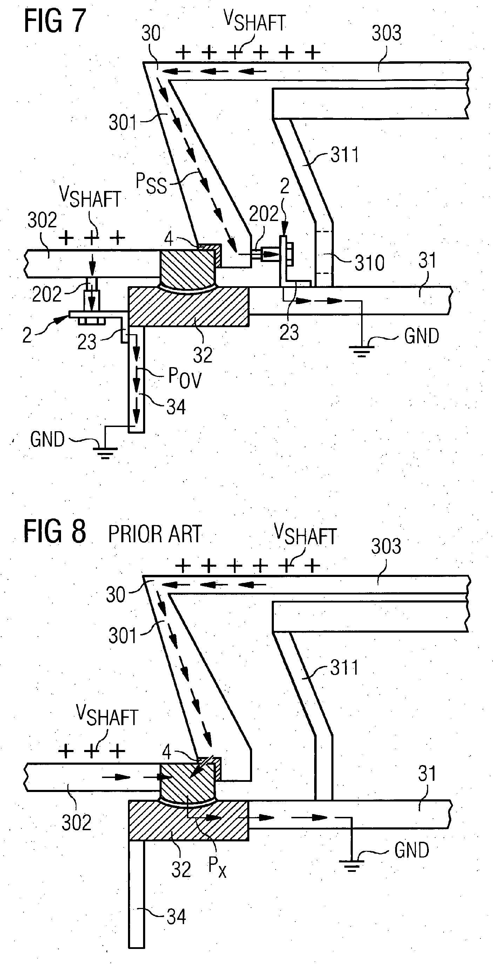

Fig. 7 shows a cross-section of a part of a generator 3 and a grounding element 2. In this embodiment, a circular rotor housing 30 is arranged about a circular main bearing 32 by means of a rotor front plate 301. To prevent a current from finding a current path through the bearing 32, a grounding element 2 is mounted between the stator shaft 31 and the rotor front plate 301 such that the contact portion 202 of a carbon brush is pressed against a surface of the rotor front plate 301. Since the grounding element 2 is entirely conductive, any voltage V_{SHAFT} building up on the rotor housing 30 can safely discharge as a current travelling through the rotor front plate 301, grounding element 2, and stator shaft 31 through the path P_{SS} to ground.

Ultimately, since the contact portion 202 is actively pressed by the spring portion 201 onto the rotor front plate 301, the contact portion 202 will wear down over time on account of friction between it and the rotor front plate 301. The feed adjuster can easily be accessed through an access opening 310 in a stator front plate 311, as shown. A technician can simply tighten the grub screw if the remaining contact portion is long enough. Otherwise, if the contact portion has already worn down beyond a certain limit and, for example, the grub screw can no longer be used to extend the contact portion 202, the technician can simply remove the grub screw, remove the worn carbon brush, insert a new carbon brush, and replace the grub screw, tightening it sufficiently to ensure a good electrical contact to the rotor front plate 301 again.

Fig. 7 also shows an additional possible location for a grounding element 2 to contact the rotor hub 302. In this embodiment, the grounding element 2 is mounted to an anti-ovalization ring 34 that in turn is mounted to the inner race of the main bearing 32. Any shaft voltages V_{SHAFT} that build up on the rotor hub 302 can safely be discharged through the grounding element 2 along the path Pₒᵥ shown. This grounding element 2 can be accessed relatively easily too, since a passage through the cylindrical stator shaft 31 is usually given between the nacelle interior and the hub interior in a direct-drive wind turbine.

In either case, a safe path for any shaft current is afforded either by a path Pₛₛ through the stator shaft 31 to ground GND, or by the path Pₒᵥ through the anti-ovalization ring 34 to ground GND. These low-resistance paths Pₛₛ, Pₒᵥ ensure that a current discharge would not seek the path Pₓ through the bearing 32, as indicated in Fig. 8, which shows a prior art grounding arrangement for a direct-drive wind turbine generator, comprising an isolation ring 4 between the bearing 32 and the rotating parts 301, 302. Any deficiency in the isolation ring 4 can be sufficient to allow a current to discharge through a path Pₓ through the bearing 32, thereby damaging the bearing 32 and resulting in serious damage and costly repairs.

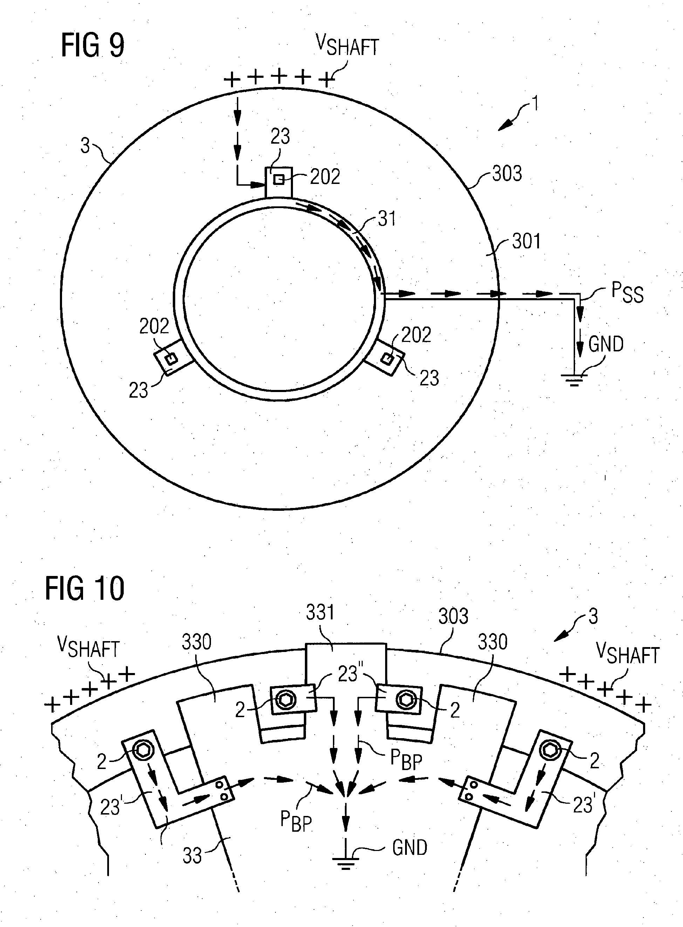

Fig. 9 is a very simplified cross-section through a generator 3 according to the invention. The diagram shows a grounding arrangement 1 comprising three grounding elements 2 arranged more or less equidistantly about the stator shaft 31. As the rotor housing 30 rotates about the stationary stator shaft 31, any shaft voltages V_{SHAFT} that build up can safely discharge as current along the current paths Pₛₛ to electrical ground GND, through the rotor front plate 301, the grounding elements 2 and the stator shaft 31. The diagram only shows the current path through one exemplary grounding element 2, but it should be understood that the shaft voltage V_{SHAFT} can be distributed about the entire rotor housing 303, and can discharge through each of the three grounding elements 2 and through the stator shaft 31 to ground GND.

Fig. 10 is a schematic representation of part of a generator 3 according to the invention, as seen from the brake side. The diagram shows a brake arrangement with brake shoes 330 and a rotor lock 331 on a stationary brake plate 33, which in turn is mounted to the stator shaft (not shown). A flat right-angled bracket 23' for a grounding element 2 is connected to the brake plate 33, so that the grounding element 2 it contains can be pressed against a corresponding surface of the rotor housing 303 as this rotates. Another, straight bracket 23" can be secured to the rotor lock 331 so that the grounding element 2 it contains can be pressed against the rotor housing 303 as this rotates. In either case, any shaft voltages V_{SHAFT} that build up can safely discharge through brake plate current paths P_{BP} to electrical ground GND. The braking arrangement can comprise two or three such brake plates 33 arranged about the rotor housing 303 at the nacelle end of the generator 3, and the grounding arrangement 1 can comprise a corresponding number of grounding elements 2.

Although the present invention has been disclosed in the form of preferred embodiments and variations thereon, it will be understood that numerous additional modifications and variations could be made thereto without departing from the scope of the invention. For example, the grounding arrangement according to the invention could be used in any applications using a direct-drive outer rotor permanent-magnet machine with a single bearing arrangement. Apart from its use in a wind turbine, the grounding arrangement could be used in an application such as large power drives.

For the sake of clarity, it is to be understood that the use of "a" or "an" throughout this application does not exclude a plurality, and "comprising" does not exclude other steps or elements.

## Claims

1. A grounding element (2) for providing a current path (P_{SS}, P_{OV}, P_{BP}) to electrical ground (GND) from the rotor (30) of a direct-drive wind turbine generator (3), which grounding element (2) comprises
- a brush (20) comprising a spring-loaded portion (201) and a contact portion (202) for making electrical contact to a surface (301, 302, 303) of the rotor (30);
- a bracket (23, 23', 23") realised to be mounted to a stationary part (31, 33) of the generator (3); and
- a holding element (21) realised to hold the brush (20) in the bracket (23, 23', 23") such that the contact portion (202) is pressed against the rotor surface (301, 302, 303);
**characterized in that** the holding element (21) comprises a first cavity (211) realised to accommodate the brush (20) such that the contact portion (202) of the brush (20) protrudes beyond an outer face (25) of the holding element (21); and an outer threaded portion (26) realised to complement an inner threaded portion (231) of the bracket (23, 23', 23").

2. A grounding element according to claim 1, comprising a feed adjuster (24) for adjusting the position of the brush (20) in the holding element (21).

3. A grounding element according to claim 2, wherein the holding element (21) comprises a second cavity (212) realised to accommodate the feed adjuster (24).

4. A grounding element according to claim 2 or claim 3, wherein the holding element (21) comprises an inner threaded portion (25) realised to complement an outer threaded portion (212) of the feed adjuster (24).

5. A grounding element according to any of the preceding claims, wherein the first cavity (211) comprises a portion with a square cross-section.

6. A grounding element according to claim 5, wherein the remainder of the first cavity (211) comprises a round bore.

7. A grounding element according to any of claims 1 to 6 wherein the bracket (23, 23', 23") is realised for mounting to a stator (31) of the direct-drive wind turbine generator (3) such that the brush (20) contacts a surface (301, 302) of the rotor (30) to provide a current path (P_{SS}, P_{OV}) from the rotor (30) through the stator (31) to electrical ground (GND) and/or for mounting to a brake plate (33) such that the brush (20) contacts a surface (303) of the rotor (30) to provide a current path (P_{BP}) from the rotor (30) through the brake plate (33) to electrical ground (GND).

8. A grounding arrangement (1) for a direct-drive wind turbine generator (3) comprising an outer rotor (30), a stator (31), and a bearing (32) arranged between the rotor (30) and the stator (31); which grounding arrangement (1) comprises a number of grounding elements (2) according to any of claims 1 to 7 arranged to provide a current path (P_{SS}, P_{OV}, P_{BP}) from the rotor (30) to electrical ground (GND), which current path (P_{SS}, P_{OV}, P_{BP}) bypasses the bearing (32).

9. A grounding arrangement according to claim 8, comprising a first set of grounding elements (2) arranged at the hub side of the generator (3).

10. A grounding arrangement according to claim 8 or claim 9, comprising a second set of grounding elements (2) arranged at the brake side of the generator (3).

11. A grounding arrangement according to any of claims 8 to 10, wherein the grounding arrangement (1) comprises an isolation ring (4) arranged about the bearing (32).

12. A direct-drive wind turbine generator (3) comprising an outer rotor (30), a stator (31), and a bearing (32) arranged between the rotor (30) and the stator (31), which generator (3) comprises a grounding arrangement (1) according to any of claims 8 to 11 to provide a current path (P_{SS}, P_{OV}, P_{BP}) from the rotor (30) to electrical ground (GND),
**characterized in that** the grounding arrangement (1) comprises a number of grounding elements (2) according to any of claims 1 to 7.

13. A generator according to claim 12, comprising a number of access openings (310) arranged to provide access to a bracket (23) of a grounding element (2).

14. A method of performing maintenance on a grounding arrangement (1) according to any of claims 8 to 11, arranged in a direct-drive wind turbine generator (3) comprising an outer rotor (30), a stator (31), and a bearing (32) arranged between the rotor (30) and the stator (31), and a grounding element (2) according to any of claims 1 to 7, which method comprises adjusting the position of the brush (20) in a grounding element (2) to increase a pressure between the contact portion (202) of the brush (20) and a corresponding surface (301, 302, 303) of the rotor (30) to ensure an uninterrupted current path (P_{SS}, P_{OV}, P_{BP}) from the rotor (30) to electrical ground (GND) that bypasses the bearing (32).

15. A method according to claim 14, comprising the steps of
- removing a feed adjuster (24) from the holding element (21) of a grounding element (2);
- removing the brush (20) from the holding element (21);
- inserting a replacement brush (20) into the holding element (21); and
- re-inserting the feed adjuster (24) into the holding element (21) such that a pressure is established between the contact portion (202) of the brush (20) and the corresponding surface (301, 302, 303) of the rotor (30).

## Patentansprüche

1. Erdungselement (2) zum Bereitstellen eines Strompfades (P_{SS}, P_{0V}, P_{BP}) zu einer elektrischen Erde (GND) vom Rotor (30) eines Windenergieanlagengenerators (3) mit Direktantrieb, wobei dieses Erdungselement (2) umfasst:
- eine Bürste (20), die einen federbelasteten Abschnitt (201) und einen Kontaktabschnitt (202) zum Herstellen des elektrischen Kontakts zu einer Fläche (301, 302, 303) des Rotors (30) umfasst,
- eine Konsole (23, 23', 23"), die dafür ausgebildet ist, an einem stationären Teil (31, 33) des Generators (3) angebracht zu werden; und
- ein Halteelement (21), das dafür ausgebildet ist, die Bürste (20) in der Konsole (23, 23', 23") zu halten, so dass der Kontaktabschnitt (202) gegen die Rotorfläche (301, 302, 303) gepresst wird;
**dadurch gekennzeichnet, dass** das Halteelement (21) einen ersten Hohlraum (211), der dafür ausgebildet ist, die Bürste (20) aufzunehmen, derart, dass der Kontaktabschnitt (202) der Bürste (20) über eine Außenfläche (25) des Halteelements (21) hinausragt; und einen mit einem Außengewinde versehenen Abschnitt (26), der komplementär zu einem mit einem Innengewinde versehenen Abschnitt (231) der Konsole (23, 23', 23") ausgebildet ist, umfasst.

2. Erdungselement nach Anspruch 1, welches einen Vorschubeinsteller (24) zum Einstellen der Position der Bürste (20) in dem Halteelement (21) umfasst.

3. Erdungselement nach Anspruch 2, wobei das Halteelement (21) einen zweiten Hohlraum (212) umfasst, der dafür ausgebildet ist, den Vorschubeinsteller (24) aufzunehmen.

4. Erdungselement nach Anspruch 2 oder Anspruch 3, wobei das Halteelement (21) einen mit einem Innengewinde versehenen Abschnitt (25) umfasst, der komplementär zu einem mit einem Außengewinde versehenen Abschnitt (212) des Vorschubeinstellers (24) ausgebildet ist.

5. Erdungselement nach einem der vorhergehenden Ansprüche, wobei der erste Hohlraum (211) einen Abschnitt mit einem quadratischen Querschnitt umfasst.

6. Erdungselement nach Anspruch 5, wobei der restliche Teil des ersten Hohlraums (211) eine runde Bohrung umfasst.

7. Erdungselement nach einem der Ansprüche 1 bis 6, wobei die Konsole (23, 23', 23") für die Anbringung an einem Stator (31) des Windenergieanlagengenerators (3) mit Direktantrieb, derart, dass sich die Bürste (20) mit einer Fläche (301, 302) des Rotors (30) in Kontakt befindet, um einen Strompfad (P_{SS}, P_{0V}) vom Rotor (30) über den Stator (31) zu einer elektrischen Erde (GND) bereitzustellen, und/oder für die Anbringung an einer Bremsplatte (33), derart, dass sich die Bürste (20) mit einer Fläche (303) des Rotors (30) in Kontakt befindet, um einen Strompfad (P_{BP}) vom Rotor (30) über die Bremsplatte (33) zu einer elektrischen Erde (GND) bereitzustellen, ausgebildet ist.

8. Erdungsanordnung (1) für einen Windenergieanlagengenerator (3) mit Direktantrieb, der einen Außenrotor (30), einen Stator (31) und ein zwischen dem Rotor (30) und dem Stator (31) angeordnetes Lager (32) umfasst, wobei diese Erdungsanordnung (1) eine Anzahl von Erdungselementen (2) nach einem der Ansprüche 1 bis 7 umfasst, die dafür ausgelegt sind, einen Strompfad (P_{SS}, Pov, P_{BP}) vom Rotor (30) zu einer elektrischen Erde (GND) bereitzustellen, wobei dieser Strompfad (P_{SS}, P_{0V}, P_{BP}) das Lager (32) umgeht.

9. Erdungsanordnung nach Anspruch 8, welche einen ersten Satz von Erdungselementen (2) umfasst, die an der Nabenseite des Generators (3) angeordnet sind.

10. Erdungsanordnung nach Anspruch 8 oder Anspruch 9, welche einen zweiten Satz von Erdungselementen (2) umfasst, die an der Bremsenseite des Generators (3) angeordnet sind.

11. Erdungsanordnung nach einem der Ansprüche 8 bis 10, wobei die Erdungsanordnung (1) einen Isolationsring (4) umfasst, der um das Lager (32) herum angeordnet ist.

12. Windenergieanlagengenerator (3) mit Direktantrieb, welcher einen Außenrotor (30), einen Stator (31) und ein zwischen dem Rotor (30) und dem Stator (31) angeordnetes Lager (32) umfasst, wobei dieser Generator (3) eine Erdungsanordnung (1) nach einem der Ansprüche 8 bis 11 umfasst, um einen Strompfad (P_{SS}, P_{0V}, P_{BP}) vom Rotor (30) zu einer elektrischen Erde (GND) bereitzustellen,
**dadurch gekennzeichnet, dass** die Erdungsanordnung (1) eine Anzahl von Erdungselementen (2) nach einem der Ansprüche 1 bis 7 umfasst.

13. Generator nach Anspruch 12, welcher eine Anzahl von Zugangsöffnungen (310) umfasst, die dafür eingerichtet sind, einen Zugang zu einer Konsole (23) eines Erdungselements (2) bereitzustellen.

14. Verfahren zur Durchführung einer Wartung an einer Erdungsanordnung (1) nach einem der Ansprüche 8 bis 11, die in einem Windenergieanlagengenerator (3) mit Direktantrieb angeordnet ist, der einen Außenrotor (30), einen Stator (31) und ein zwischen dem Rotor (30) und dem Stator (31) angeordnetes Lager (32) umfasst, und an einem Erdungselement (2) nach einem der Ansprüche 1 bis 7, wobei dieses Verfahren das Verstellen der Position der Bürste (20) in einem Erdungselement (2) umfasst, um einen Druck zwischen dem Kontaktabschnitt (202) der Bürste (20) und einer entsprechenden Fläche (301, 302, 303) des Rotors (30) zu erhöhen, um einen ununterbrochenen Strompfad (P_{SS}, P_{OV}, P_{BP}) vom Rotor (30) zu einer elektrischen Erde (GND) bereitzustellen, welcher das Lager (32) umgeht.

15. Verfahren nach Anspruch 14, welches die folgenden Schritte umfasst:
- Entfernen eines Vorschubeinstellers (24) von dem Halteelement (21) eines Erdungselements (2);
- Entfernen der Bürste (20) von dem Halteelement (21);
- Einsetzen einer Ersatzbürste (20) in das Halteelement (21); und
- Wiedereinsetzen des Vorschubeinstellers (24) in das Halteelement (21), so dass ein Druck zwischen dem Kontaktabschnitt (202) der Bürste (20) und der entsprechenden Fläche (301, 302, 303) des Rotors (30) hergestellt wird.

## Revendications

1. Elément de mise à la terre (2) pour fournir un trajet de courant (P_{SS}, P_{OV}, P_{BP}) à une mise à la terre (GND), à partir du rotor (30) d'un générateur d'éolienne à entraînement direct (3), lequel élément de mise à la terre (2) comprend
- un balai (20) comprenant une partie à ressort (201) et une partie (202) faisant contact pour établir un contact électrique sur une surface (301, 302, 303) du rotor (30);
- un support (23, 23', 23") réalisé pour être monté sur une pièce fixe (31, 33) du générateur (3); et
- un élément de fixation (21) réalisé pour fixer le balai (20) dans le support (23, 23', 23"), de sorte que la partie (202) faisant contact est pressée contre la surface de rotor (301, 302, 303);
**caractérisé en ce que** l'élément de fixation (21) comprend une première cavité (211) réalisée pour loger le balai (20), de sorte que la partie (202) du balai (20) faisant contact dépasse au-delà d'une face extérieure (25) de l'élément de fixation (21); et une partie filetée extérieure (26) réalisée pour venir en complément d'une partie filetée intérieure (231) du support (23, 23', 23").

2. Elément de mise à la terre selon la revendication 1, comprenant un élément réglant l'alimentation (24) pour ajuster la position du balai (20) dans l'élément de fixation (21).

3. Elément de mise à la terre selon la revendication 2, dans lequel l'élément de fixation (21) comprend une seconde cavité (212) réalisée pour loger l'élément réglant l'alimentation (24).

4. Elément de mise à la terre selon la revendication 2 ou la revendication 3, dans lequel l'élément de fixation (21) comprend une partie filetée intérieure (25) réalisée pour venir en complément d'une partie filetée extérieure (212) de l'élément réglant l'alimentation (24).

5. Elément de mise à la terre selon l'une quelconque des revendications précédentes, dans lequel la première cavité (211) comprend une partie ayant une section carrée.

6. Elément de mise à la terre selon la revendication 5, dans lequel la partie restante de la première cavité (211) comprend un alésage circulaire.

7. Elément de mise à la terre selon l'une quelconque des revendications 1 à 6, dans lequel le support (23, 23', 23") est réalisé pour montage sur un stator (31) du générateur d'éolienne à entraînement direct (3), de sorte que le balai (20) vient au contact d'une surface (301, 302) du rotor (30), pour fournir un trajet de courant (P_{SS}, P_{OV}) depuis le rotor (30), à travers le stator (31), jusqu'à la mise à la terre (GND), et/ou pour montage sur une plaque de frein (33), de sorte que le balai (20) vient au contact d'une surface (303) du rotor (30), pour fournir un trajet de courant (P_{BP}) depuis le rotor (30), à travers la plaque de frein (33), jusqu'à la mise à la terre (GND).

8. Agencement de mise à la terre (1) pour un générateur d'éolienne à entraînement direct (3) comprenant un rotor extérieur (30), un stator (31) et un roulement (32) disposé entre le rotor (30) et le stator (31), lequel agencement de mise à la terre (1) comprend un nombre d'éléments de mise à la terre (2) selon l'une quelconque des revendications 1 à 7, agencés pour fournir un trajet de courant (P_{SS}, P_{OV}, P_{BP}) depuis le rotor (30) jusqu'à la mise à la terre (GND), lequel trajet de courant (P_{SS}, P_{OV}, P_{BP}) contourne le roulement (32).

9. Agencement de mise à la terre selon la revendication 8, comprenant un premier ensemble d'éléments de mise à la terre (2) agencés au niveau du côté moyeu du générateur (3).

10. Agencement de mise à la terre selon la revendication 8 ou la revendication 9, comprenant un second ensemble d'éléments de mise à la terre (2) agencés au niveau du côté frein du générateur (3).

11. Agencement de mise à la terre selon l'une quelconque des revendications 8 à 10, où l'agencement de mise à la terre (1) comprend une bague d'isolation (4) disposée autour du roulement (32).

12. Générateur d'éolienne à entraînement direct (3) comprenant un rotor extérieur (30), un stator (31) et un roulement (32) disposé entre le rotor (30) et le stator (31), lequel générateur (3) comprend un agencement de mise à la terre (1) selon l'une quelconque des revendications 8 à 11, pour fournir un trajet de courant (P_{SS}, P_{OV}, P_{BP}) depuis le rotor (30) jusqu'à la mise à la terre (GND),
**caractérisé en ce que** l'agencement de mise à la terre (1) comprend un nombre d'éléments de mise à la terre (2) selon l'une quelconque des revendications 1 à 7.

13. Générateur selon la revendication 12, comprenant un nombre d'ouvertures d'accès (310) agencées pour fournir un accès à un support (23) d'un élément de mise à la terre (2).

14. Procédé pour effectuer la maintenance sur un agencement de mise à la terre (1) selon l'une quelconque des revendications 8 à 11, disposé dans un générateur d'éolienne à entraînement direct (3) comprenant un rotor extérieur (30), un stator (31) et un roulement (32) disposé entre le rotor (30) et le stator (31), et un élément de mise à la terre (2) selon l'une quelconque des revendications 1 à 7, lequel procédé comprend l'ajustement de la position du balai (20) dans un élément de mise à la terre (2), pour augmenter une pression entre la partie (202) du balai (20) faisant contact et une surface correspondante (301, 302, 303) du rotor (30), pour garantir un trajet de courant ininterrompu (P_{SS}, P_{OV}, P_{BP}) depuis le rotor (30) jusqu'à la mise à la terre (GND) qui contourne le roulement (32).

15. Procédé selon la revendication 14, comprenant les étapes consistant à
- enlever un élément réglant l'alimentation (24), de l'élément de fixation (21) d'un élément de mise à la terre (2);
- enlever le balai (20), de l'élément de fixation (21);
- insérer un balai de rechange (20) dans l'élément de fixation (21); et
- réintroduire l'élément réglant l'alimentation (24), dans l'élément de fixation, de sorte qu'une pression est établie entre la partie (202) du balai (20) faisant contact et la surface correspondante (301, 302, 303) du rotor (30).
